# EUROPEAN PATENT SPECIFICATION

(11) **EP 0 880 863 B1**
(45) Date of publication and mention of the grant of the patent: **13.06.2001**
(21) Application number: 96909318.6
(22) Date of filing: 28.03.1996
(51) Int. Cl.: H04Q 7/22, H04L 12/66

(54) **ROUTING OF SHORT MESSAGES FOR TELECOMMUNICATIONS NETWORKS**
KURZNACHRICHTENWEGLEITUNG IN TELEKOMMUNIKATIONSNETZWERKEN
ROUTAGE DE MESSAGES COURTS POUR UN RESEAU DE TELECOMMUNICATIONS

(43) Date of publication of application: 02.12.1998
(73) Proprietor: Markport Limited, Dublin 1 (IE)
(72) Inventor: CORRIGAN, Louis, County Meath (IE); DOYLE, James, County Wicklow (IE); CUNNINGHAM, Joseph, Dublin 15 (IE); GREENWOOD, James, Dublin 4 (IE)
(74) Representative: O'Brien, John Augustine
(86) International application number: IE9600016
(87) International publication number: WO9736434

(56) References cited:
- WO-A-92/14329
- WO-A-95/16330
- PROCEEDINGS. SECOND INTERNATIONAL WORKSHOP ON SERVICES IN DISTRIBUTED AND NETWORKED ENVIRONMENTS (CAT. NO.95TH8091), SECOND INTERNATIONAL WORKSHOP ON SERVICES IN DISTRIBUTED AND NETWORKED ENVIRONMENTS, WHISTLER, BC, CANADA, 5-6 JUNE 1995, ISBN 0-8186-7092-4, 1995, LOS ALAMITOS, CA, USA, IEEE COMPUT. SOC. PRESS, USA, pages 140-145, XP000612264 MARTINI G ET AL: "Distributed architecture for applications based on the GSM short message service"
- CSELT TECHNICAL REPORTS, vol. 23, no. 3, 1 June 1995, pages 337-349, XP000573777 COLLESI S ET AL: "SMS BASED APPLICATIONS FOR GSM NETWORKS"

## Description

The invention relates to routing of short messages for telecommunications networks such as mobile networks or ISDN networks.

Heretofore short messages have been routed by a short message service centre (SMSC) which interacts with the telecommunications network on one side and on the other side is connected to a number of application interface modules (AIMs). These modules are, in turn, connected to user service systems which provide the user with an interface to avail of the various short messaging facilities available. These include paging, voice mail callback, automatic vehicle location facilities using GPS functions, electronic mail alert facilities and information services such as share price update messaging. Therefore, the SMSC has functioned quite well at building up a range of facilities which are useful to users and involve use of various networks, primarily mobile telecommunications networks.

As described in WO 94/16532 and WO 94/09599, the SMSC is connected to the network, in these examples a mobile network. The connection is to the home location register (HLR) and also to a lower level in the mobile network at the mobile switching centre (MSCs).

However, as the number of subscribers increases, problems have arisen in the ability of this architecture to provide a sufficiently fast response. Further, the internal structure of the SMSC is quite complex and it has proved to be quite difficult to upgrade, both for improving performance and for adding additional services. A further problem has been a limited ability to retrieve management information.

The invention is therefore directed towards providing for routing of short messages in a manner whereby a shorter response time is provided, there is more versatility in use, and upgrades may be more easily implemented.

According to the invention, there is provided a network access system for routing of short messages, the network access system comprising:-
a gateway switching centre comprising means for transmitting short messages to a network;
an interworking switching centre comprising means for receiving short messages from a network; and
a gateway agent connected to the gateway switching centre and an interworking agent connected to the interworking switching centre, each agent being publicly addressable and comprising means for communicating with a plurality of external short message service centres, each service centre being associated with a plurality of short message entities.

Because the network access system connects with short message service centres (SMSCs) and furthermore communicates with a number of SMSCs, a large degree of versatility is provided in linking or associating short message entities (SMEs) with networks. This allows the service devices (located within a customer access system layer) to be easily upgraded and/or modified. Further, because the system comprises a simple architecture of gateway and interworking switching centres connected to agents, there is a very fast throughput of messages and operation is simple.

In one embodiment, each agent comprises a table of associations cross-referencing external short message service centres with short message entities.

Preferably, the system comprises:-
a transfer layer comprising the agents,
a relay layer comprising the switching centres; and
a network API connected to the switching centres and comprising means for connection to the network.

This is a simple architecture.

In one embodiment, the system further comprises a separate and addressable database server connected to a database, the database server comprising means for establishing internal communication links with requesting processes in the network access system for multiple access, said processes including the agents and the switching centres.

This arrangement allows multiple access of processes to data without blocking because there is simple, single-channel access control.

Preferably, the database server comprises means for performing database operations independently of the requesting processes.

In one embodiment, processes within the system comprise means for communicating with each other by establishing one-to-one channels directly interconnecting pairs of processes, and for transmitting and receiving signals via the sockets using interprocess communication protocols. This arrangement provides for very fast intercommunication for fast short message throughput.

In another embodiment, the system further comprises a layer of common processors, each comprising means for communicating with processes in other parts of the network access system. This arrangement separates the auxiliary operations from the short message throughput devices, therefore allowing a simple architecture to be used.

In one embodiment, at least some of the processes of the system are programmed to detect when pre-set events occur and to automatically transmit signals representing these events to an event handler process within the common set of processes.

Preferably, the event handler process comprises means for filtering received event signals and, according to the filter criteria, writing the events with a time stamp to a log file, and transmitting event information to other processes.

This allows for very simple event monitoring.

In another embodiment, at least processes comprise means for updating a counter with statistical information as operations are performed, and the common set comprises a performance handler comprising means for polling said processes and retrieving statistical information. This arrangement allows for capture of a comprehensive set of management information.

In one embodiment, at least some processes are programmed to recognise a data storage flag indicating a transient or a persistent status.

Preferably, the system further comprises a process manager comprising means for monitoring operating system utilities to determine activation status of processes and for directing re-start of processes which have shut down.

In another embodiment, the system further comprises a configuration database server comprising means for storing and retrieving system configuration parameters for processes of the system.

According to another aspect, the invention provides:-
a network API layer having means for connection to a plurality of networks;
a relay layer comprising a gateway switching sensor comprising means for transmitting short messages to a network and an interworking switching centre comprising means for receiving short messages from a network; and
a transfer layer comprising a gateway agent connected to the gateway switching centre and an interworking agent connected to the interworking switching centre, each agent being publicly addressable and comprising means for communicating with a plurality of external short message service centres and comprising a table of associations cross-referencing external short message service centres with short message entities.

The invention will be more clearly understood from the following description of some embodiments thereof, given by way of example only with reference to the accompanying drawings in which:-
Fig. 1 is a diagram showing the manner in which two network access systems of the invention are connected;
Fig. 2 is a more detailed diagram showing construction of a network access system;
Fig. 3 is a diagram showing operation of an event handler within the network access system; and
Fig. 4 is a diagram showing operation of a performance handler of the network access system.

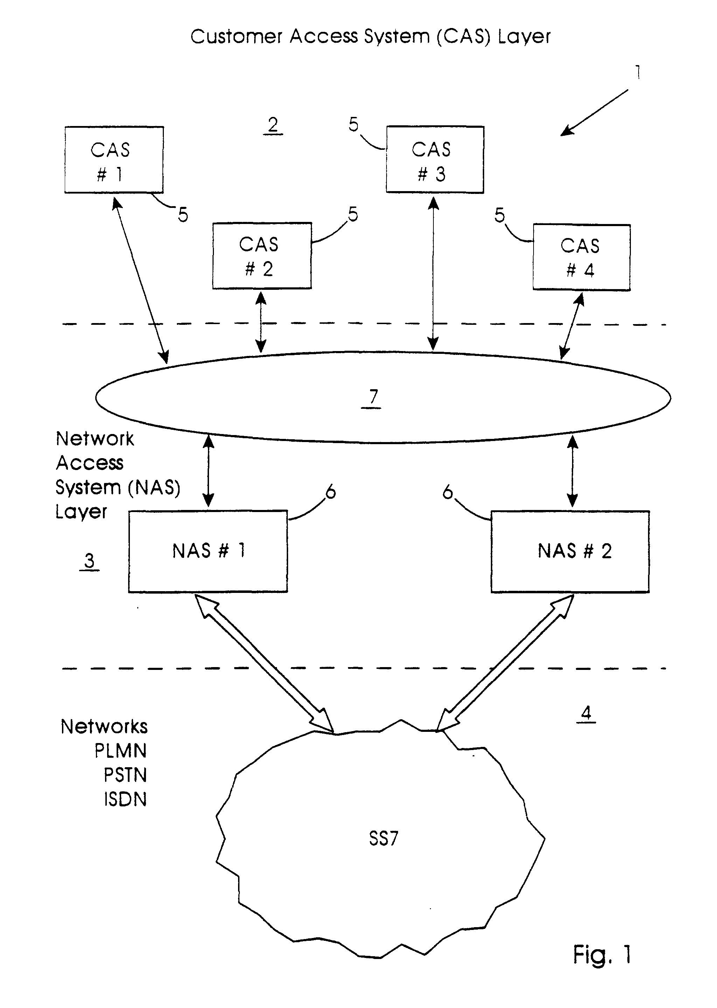

Referring to the drawings and initially to Fig. 1, there is shown a distributed short messaging system 1. The system 1 has a customer access system (CAS) layer 2, a network access system (NAS) layer 3 and a network layer 4. The network layer 4 comprises one or a number of networks such as GSM 3.40 or IS41 mobile networks or networks which are primarily land-based such as PLMN, PSTN or ISDN networks. In short, any telecommunications network which has short message handling facilities may be part of the layer 4. The connections between the network access system layer 3 and the network layer 4 are at any desired level within each individual network. For example, where the connection is to a GSM 3.40 mobile network, the connection may be directly to the HLR and also to MSCs.

The customer access system (CAS) layer 2 includes a number of customer access systems CAS*1, CAS*2, CAS*3 and CAS*4, all indicated generally by the numeral 5. Each of the CASs 5 is a short message service centre (SMSC) and provides a user service such as a mobile network short messaging service, for example, that marketed under the name TELEPATH™ by Aldiscon Limited. These services are provided for short message entities (SMEs) connected to each CAS. Other CASs 5 may provide functions such as voice-mail interworking or corporate access facilities. An important aspect of the invention is the fact that each NAS 6 provides a large degree of versatility as it routes short messages from any CAS 5 to any network in the layer 4. To achieve this, each CAS 5 is connected to a central router 7 such as a TCP/IP or X.25-based data communications network which routes short messages to a selected NAS 6, which in turn routes it to the selected network within the layer 4 and provides the return signal. Each NAS 6 is on a stand-alone hardware machine and has the sole function of routing signals in both directions between the CAS layer 2 and the network layer 4. Each NAS 6 is a publicly addressable agent with a defined address assigned by each network in the layer 4. This address is viewed as a default service centre address of the NAS 6. The set of SMEs served by a particular NAS 6 is defined in a configuration dataset maintained by a network operator and made accessible to each NAS 6.

In general, the term "gateway" is used to indicate traffic originating in the CAS layer 2 and having a destination in the network layer 4, and the term "interworking" means traffic which originates in the network layer 4 and has a destination in the CAS layer 2.

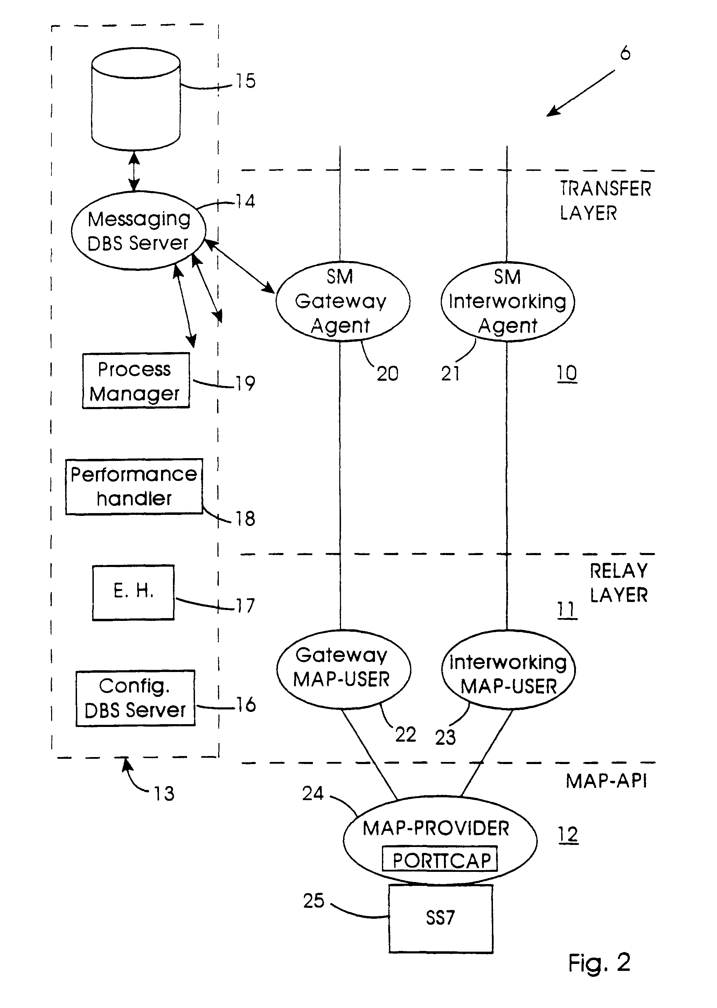

Referring now to Fig. 2, construction of a NAS 6 is now described in more detail. The NAS 6 has three distinct operational layers, namely a transfer layer 10, a relay layer 11, and an API layer 12, in this embodiment a MAP-API. There is also a common layer 13 which has various processes which interact with processes within the transfer, relay, and API layers.

The transfer layer 10 operates at the highest level within the NAS 6 and performs functions including:
non-volatile message storage,
long-term message retry,
message expiration,
message cancellation,
message replacement,
network-operator barring, and
billing indications.

The transfer layer 10 interfaces with the CAS layer 2 through a data command network based on TCP/IP or X.25 protocols.

The relay layer 11 operates at a lower level and performs "intelligent" gateway and interworking switching centre operations, including control of:
Mobile Terminated (MT) traffic
Mobile Originated (MO) traffic
Service Centre (SC)-Alert
"Short Term" (Network-specific) message retry.

The transfer layer 10 comprises a short message delivery agent (SMDA) 20 and a short message interworking agent (SMIA) 21. The relay layer 11 comprises a gateway switching centre or MAP-User 22 and an interworking switching centre or MAP-User 23. Finally, the API layer 12 comprises a MAP-Provider 24 and an SS7 interface 25.

Within the common process set or layer 13, there is a messaging database server 14 connected to a database 15, a configuration database server 16, an event handler 17, a performance handler 18 and a process manager 19.

The switching centres perform the low-level switching operations in conjunction with the API layer 12. The agents operate at a higher level and allow the NAS to be identifiable and publicly addressed as an agent by a telecommunications network. Each agent can communicate with a number of CASs 5, and via the CASs 5 with a number of SMEs to which they are connected. To control this, each agent maintains a table which cross-references CASs 5 with SMEs by associations. An association may be an address, a prefix or an identifier as appropriate.

Each of the processes within the various layers communicates internally with other internal processes by creating an interprocess communication socket and leaving that socket in place while the NAS 6 is operational. Using each socket, a process may transmit a signal to another process, wait for a response and then continue processing. In another mode, however, it may await an acknowledgement, and then proceed with other processing and subsequently receive a response. This socket binding mechanism operates at a higher level than underlying TCP/IP communication control.

The gateway agent 20 receives short messages originating from the CAS layer 2 and having a destination in the network layer 4, it carries out one or more of the processing functions outlined above, and re-transmits the message to the gateway MAP-User 22, which in turn carries out lower-level operations. The message is then passed on to the network via the API 12. Signals from the network layer 4 are routed through the API 12 to the interworking MAP-User 23, which may perform some low-level operations such as message validation or transaction operations.

The message is then passed to the SMIA 21 which can perform some of the operations outlined above before being re-transmitted to the relevant CAS 5 in the layer 2.

Regarding the database server 14, this operates using the interprocess communication method outlined above. It is bound by a channel or socket to all of the processes so that they all have access to data. The manner in which the database 15 is structured and accessed is transparent to the various processes as it operates independently of the originating and destination processes. By use of multiple sockets, the server 14 supports multiple processes and this is achieved primarily because the sockets are created and communication is then carried out in a request-response methodology which avoids requesting processes being blocked by invoking a single synchronous database request.

In communication with the database 15, the server 14 performs the key messaging operations including MST_INSERT (submission of a new message into the database 15), MST-COMPLETED (updating of a message to indicate message has reached its final state), and MST_SEARCH (search for the next message to be delivered to a particular SME). An important aspect is the fact that the particular database technology iins dependent of the operation of the other processes within the NAS 6. For example, in the current implementation a RAM-based database is used, however, it is envisaged that if disk-based databases significantly improve their speed, they could be used alternatively.

Turning again to operation of the processes within the layers 10 and 11, each of the processes is programmed to recognised a flag indicating a storage status for the data. One flag setting indicates that the data i"ts ransient", whereby it is retained only for the lifetime of a specific transaction such as a MAP Dialogue or a message-delivery request/response transaction. Another flag indicates that it is "persistent" which means that it is retained for longer than the lifetime of a single transaction. An example is mobile status information, another example being message data stored for re-delivery. Another flag indicates that data is "volatile" which means that it may be lost due to process or platform crash without significant impact. Such data would be cached in RAM, but with a disk copy available for re-load. A further flag indicates that data is "non-volatile", which means that it is maintained even in the event of process or platform failure. This data is stored safely on disk. In practice, the flag for volatile status will be accompanied by one for transient status. In this embodiment, persistent data may also be volatile because it is stored in shared memory, which is generally resilient to process failure but not platform failure. However, these combinations may be changed, depending on the particular hardware facilities available.

For traffic routing, the following addressing associations are used in the tables maintained by the agents 20 and 21.
- CAS (SC) Addresses
   These are the addresses of external CASs 5. Such addresses may be supplied in MO messages. It is the responsibility of the network operator to make such addresses publicly available, and to arrange for these messages to be routed to a given NAS 6. The table allows the NAS 6 to route messages with a defined CAS address to the appropriate CAS 5.
   Where the CAS address is not made publicly addressable the concept of "Logical Service-Centres" is supported. In more detail incoming traffic is directed to the CAS to which the message originator is affiliated. Routing decisions are based primarily on the specified CAS address. Routing is based secondarily on Originating-Areddss range, when the CAS address of the incoming request matches that of the NAS itself (i.e. the Network-Operator CAS address). This allows for the realisation of "Logical Service-Centres" by mapping in the table the Originating Address of incoming traffic to a "Logical Service-Centre Address" which is not visible within the underlying physical network.
- Telematic Interworking IDs
   These are the set of Telematic Interworking attributes served by a NAS. The table configuration data allows messages requiring particular Telematic Interworking attributes to be routed from a Service-Centre to an appropriate NAS.
- SME-Address Range Prefixes
   These define a set of SME Addresses specified in terms of the triple: type-of-number, numbering-plan-identification and address-prefix. This allows the definition of logical SME groups, based on numbering groups. The configuration data must allow messages in a given numbering group to be directed to a particular Service-Centre.

The SMGA 20 and SMIA 21 are complementary processes, the former receiving messages from CASs and routing them to the switching centre 22, the latter receiving messages from the switching centre 23 and routing to the appropriate CAS.

The CAS receiving an SMT-SUBMIT request is responsible for time-stamping the SMT-DELIVER request which it then generates, with a timestamp based on the local time.

The NAS 6 supports the GSM 3.40 functional requirement that all messages delivered to an MS have a unique timestamp, to a granularity of one (1) second, and that any timestamp modification required to ensure this is kept to a minimum.

For source address translation, there is translation of source addresses from one Ton/Npi/Address format to another Ton/Npi/Address format. Translation is based on Ton/Npi and Address-Prefix matching only.

For destination address translation, there is translation of destination addresses from one Ton/Npi/Address format to another Ton/Npi/Address format. Translation is based on Ton/Npi and Address-Prefix matching only.

Configurable control within the NAS 6 of supported PLMNs is provided. This is provided by configuration data which defines the set of explicitly supported MSISDN prefixes, and the set of explicitly barred MSISDN prefixes. This data is defined separately for the gateway (MT) and interworking (MO) directions.

The NAS supports the data coding scheme attribute supplied together with the data field of each short-message. For MT traffic the NAS 6 is responsible for performing conversion from particular supported coding schemes into the GSM Default Alphabet where appropriate. The supported coding schemes include ASCII, 8 bit data, GSM default, and alphabets.

For MO traffic the NAS 6 is responsible solely for relaying submitted short-messages to the appropriate CAS 5 without modification of the transfer layer data coding scheme and data service elements.

The NAS 6 is responsible for validation of the data length service element specified within short messages. A data length of zero (0) is supported.

Validation of the data length element is required, and is dependent upon the specified data coding scheme. Examples are:-
- ACSII [0 ..160]
- GSM 3.40 Default Alphabet [0 ..160]
- 8-bit Data [0 ..140]

The system will support empty messages. The NAS 6 is responsible for detecting any messages which have been queued for delivery and have reached the end of their specified validity-period without being successfully delivered, or reaching any other final state. Detection of expired messages is achieved within thirty minutes of a message reaching the end of its validity-period, with a typical detection time of less than 10 minutes.

The NAS 6 supports the message priority attribute associated with each message delivery request. A two-level priority scheme is supported within GSM. Message delivery to an SME is ordered primarily according to the message priority element, and secondarily by the CAS-timestamp of the request.

The NAS 6 is responsible for supporting configurable retry schemes to allow control over the re-delivery attempts which are made to an SME (MS) which has encountered earlier delivery failures.

Destination control of message retry is provided as a provisioning data, which allows for a default retry profile to be specified per-SME.

Originator control of message retry is provided implicitly via selection of the message priority service element in a delivery request on a per-message basis.

The NAS 6 is responsible for providing configurable retry profiles to allow control over the frequency of re-delivery attempts, dependent on the nature of the network errors encountered. A number of retry-profiles are supported. Each profile as a minimum allows for the interval between redelivery attempts to be specified on a per network-error basis. A retry profile is associated with a particular message priority setting. Thus a 'high' priority message may be associated with an aggressive retry profile. The active retry profile for a given SME will be defined either by the retry-profile associated with the highest priority message queued against the SME, or by the SMEs default retry profile, whichever is higher. This implies that retry-profiles must themselves be prioritised.

The NAS 6 provides three distinct messaging modes, providing different delivery mechanisms and associated messaging operations:

### Store-And-Forward Mode

In this mode of operation the NAS 6 is responsible for providing a report to the submitter of a message as soon as the message has been secured in non-volatile storage. Onward delivery of the message will occur subsequently. The submitter may request 'registered' delivery of this message, implying that the service-centre (CAS) is responsible for generating a subsequent notification to the message originator when the message reaches a final state. The message originator may query the state of a previously submitted message, but no support is provided for modification operations such as deletion or replacement.

### Unreliable Relay Mode

In this mode of operation the NAS 6 is responsible for relaying a message from the originator to the destination SME, and providing a report to the submitter of a message indicating the result of the delivery attempt. In the event of delivery failure no further attempts will be made once the originator has been informed of the failure, and no memory of the message will be retained by the NAS. No support is provided for subsequent operations on the message, such as querying, deletion or replacement.

### Reliable Relay Mode

In this mode of operation the NAS 6 is responsible for relaying a message from the originator to the destination SME, and providing a report to the submitter of a message indicating the result of the delivery attempt. In the event of delivery failure the message will be secured by the NAS and further delivery attempts will be made until the message reaches a final state.

The originator may request 'registered' delivery of this message, implying that the service centre (CAS) is responsible for generating a subsequent notification to the message originator when the message reaches a final state. This subsequent notification will only be generated if the original report to the originator indicated delivery failure.

In this mode, subsequent operations may be invoked by the originator including querying, deletion and replacement.

### Messaging Mode Selection

For CAS message delivery requests to a NAS 6 (gateway direction) it is possible to select the messaging mode on a message-by-message basis.

For NAS 6 message submission requests to a CAS 5 (interworking direction) it is, as a minimum, possible to configure the default messaging mode used by the NAS. Where supported by the underlying network it may be possible to allow the messaging mode to be chosen on a message-by-message basis.

### Message Cancellation (transfer layer 10)

The NAS 6 is responsible for supporting a message cancellation operation to allow a specific message to be cancelled. The NAS 6 returns a report to the requester indicating the result of the request. If a delivery attempt of the message being cancelled is currently in-progress, the request shall be held pending until after the in-progress delivery attempt has completed, so that it can then be properly processed.

Two forms of the message cancellation request are supported:
- The message to be cancelled is uniquely identified by the combination or Originating-Address and User-Reference (i.e. message reference supplied by the originator).
- The message to be cancelled is uniquely identified by the NAS Message-Reference, supplied by the originator in the response to the original deliver request.

### Message-Set Cancellation (transfer layer 10)

The NAS 6 supports a Message-Set Cancellation operation to allow a specific set of messages to be cancelled. The NAS 6 returns a report to the requester indicating the result of the request. If a delivery attempt of any message being cancelled is currently in-progress, the request is held pending until after the in-progress delivery attempt has completed, so that it can then be properly processed.

The set of messages to be cancelled is uniquely identified by the combination of Originating-Address, Destination-Address and Teleservice-ld.

### Message Text Replacement (transfer layer 10)

The NAS 6 is responsible for supporting a Message Text Replacement operation to allow the text of a specific message to be replaced. The NAS 6 returns a report to the requester indicating the result of the request. If a delivery attempt of the message being replaced is currently in progress, the request is held pending until after the in-progress delivery attempt has completed, so that it can then be properly processed. The message to be replaced is uniquely identified by the combination of Originating-Address and User-Reference.

### SME Query (transfer layer 10)

The NAS 6 is responsible for supporting an SME Query operation to allow the status of a given SME to be interrogated. The NAS returns a report to the requester indicating the current SME status. The SME to be queried is uniquely identified by the Destination-Address.

### Message Query (transfer layer 10)

The NAS 6 is responsible for supporting a Message Query operation to allow the status of a given message to be interrogated. The NAS returns a report to the requester indicating the current message status. The message to be queried is uniquely identified by the combination of Originating-Address and User-Reference.

### Message 'Registered Delivery' Update (transfer layer 10)

The NAS 6 is responsible for supporting a Message operation to allow the 'registered delivery' boolean attribute to be modified. The message to be updated is uniquely identified by the combination of Originating-Address and User-Reference.

If a delivery attempt of the message to be updated is currently in-progress, the request shall be held pending until after the in-progress delivery attempt has completed, so that it can then be properly processed.

In the above notes, the various operations performed by the processes are outlined, many of the operations being performed by the SMIA 21 and the SMDA 20. The following summarises the operations performed by the two different processes.

The gateway agent 20 is responsible for:
- Initiation of network delivery attempts using the service offered by the gateway, and provision of appropriate information to the gateway to control details of the delivery attempt, (e.g. in the GSM SMDA such information includes whether or not an SRI is required prior to a finite state machine (FSM).
- Support for Alerting functionality
   The SMDA 20 is responsible for setting of Message-Waiting-Data, detailing which Service Centres have indicated that they have messages queued for delivery to a given SME. The SMIA should subsequently receive notification when the network detects that the given SME has become available.
   The SMDA 20 is also responsible for maintaining its own list of Service-Centres (Logical or Physical) which require notification of the availability of a given SME.
- Support for configurable network-specific retry schemes.
- Maintenance of SME information, including current status, last known location, and previous network errors. Information is retained for all SMEs for which it has received messages and these messages have yet to reach a final state. (For implementation efficiency, such information may be retained for a limited period after the status of the SME has been concluded):
   - SME-Address: This is the Ton/Npi/Addr combination for the subscriber.
   - State: This is the SME's current state e.g. UNKNOWN, AVAILABLE, UNAVAILABLE, BUSY.
   - Message_Queue: This contains all or a subset of the messages currently queued for the SME.
   - Delivery_Time: This is the time that the most recent delivery attempt was made.
   - Retry-Time: This defines the time at which another attempt should be made to deliver a message to this SME.
   - Reset-Time: Time indicating when the SME was last considered to be available for message delivery.
   - Retry-Algorithm: Data pertaining to the retry-mechanism employed to determine the next retry time for this SME.
   - Attempts: Cumulative count of delivery attempts which have been made to this SME without success.
   - Network Error: Previous Network Error codes returned
   - History: by previous transmission attempts, if any.
   - Local Error History Previous Error: codes relating to internal failures returned by previous transmission attempts, if any, as opposed to actual network error conditions.
   - IMSI: Subscriber-Identity.
   - Location-Info: Data indicating last-known location of SME.

Regarding the SMIA 21, the following are the functions carried out:-
- Onward routing of network-originated requests received from the interworking function to the appropriate CAS 5.
- Support for network-originated message-related operations, such as Delete, Replace and Query, with appropriate reporting of the results of such operations to the requesting entity.
- Support of Alert functionality
   The SMIA provides notifications to the SMDA when the availability of previously unavailable SMEs (MS) is detected.
- Implementation of network operator controlled barring. This may be useful to allow barring at the earliest opportunity, without the overhead of relaying incoming requests to the CAS 5.
- Support for direct routing of MO traffic with MT destination to the SMDA 20, without relaying to a higher level Service-Centre.

With the relay layer 11, lower-level operations are performed to provide the gateway/interworking functionality for a particular mobile network. The processes 22 and 23 are responsible for:-
- Support for 'one-shot' delivery attempts to the network.
- Support for short-term re-delivery mechanisms, in response to particular reported network conditions to maximise the expected success rate of delivery while minimising network overhead.
- Provision of a delivery report to the requesting interface, once the outcome of the message delivery has been concluded.
- Relaying of received incoming short-message, MO command and SC-Alert traffic to the SMIA.

Regarding operation of the various processes within the common layer 13, these interact with the other processes in the manner described above, whereby a socket is established with each relevant process. The process manager 19 provides a level of fault tolerance by using operating system utilities to monitor activation of processes. If shut-down is detected, it uses these utilities to re-start the relevant process. The configuration DBS server 16 operates in much the same manner as the server 14. However the data stored relates to configuration settings such retry numbers, pathnames, etc.

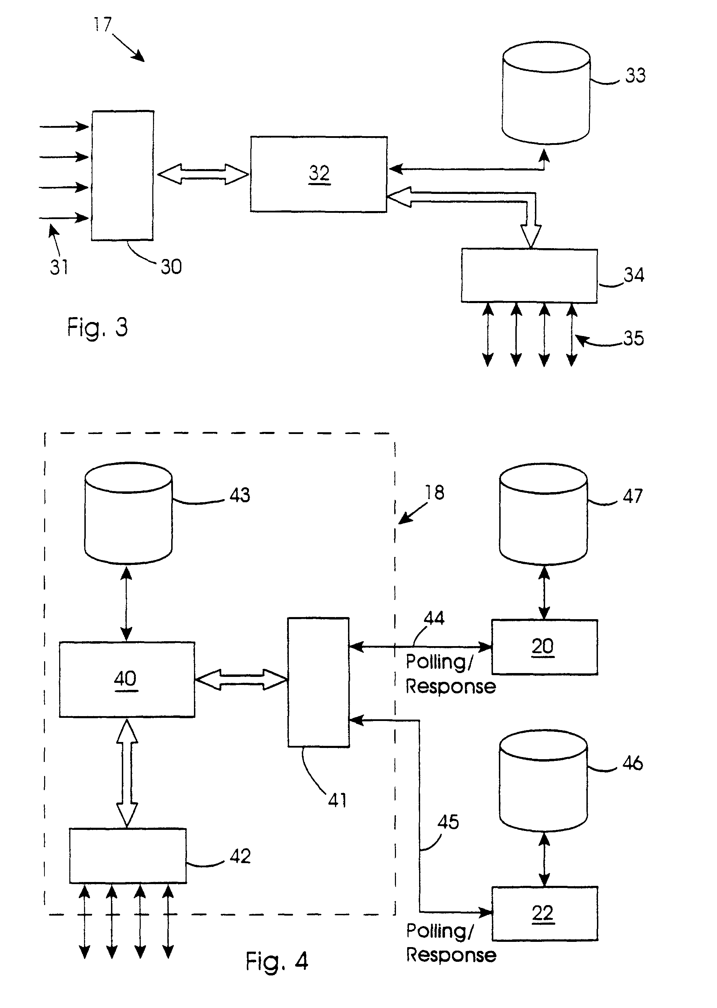

Referring now to Fig. 3, operation of the event handler 17 is now described. The event handler 17 comprises an interface 30 which is bound by sockets 31 to various processes within the NAS 6. The interface 30 is connected to a filter 32, in turn connected to a log file 33 and to an interface 34. The interface 34 provides the functionality for binding with both internal and external processes by sockets 35. Each of the processes bound to the event handler 17 is programmed to automatically record occurrences of events. The events are set in program code and may be of any desired type. Each process then automatically transmits a signal to the interface 34 and the event is filtered by the filter 30 to determine if it should be logged. If so, it is written with a time stamp to the log file 33 and any required notifications are transmitted via the sockets 35 to other processes.

Referring now to Fig. 4, operation of the performance handler 18 is now described. The performance handler 18 comprises a controller 40 connected to an interface 41 which is bound to various processes, in this embodiment the SMDA 20 and the SMIA 21 via sockets 44 and 45, respectively. The SMDA 20 has a log file 47 and the SMIA has a log file 46. The performance handler controller is also connected to an interface 42 which is bound to internal and external processes. In operation, each of the processes bound to the interface 41 maintains the counters 46 and 47 by updating a count whenever a particular operation is performed. The controller 40 is programmed to pole the processes 20 and 22 via the sockets 44 and 45 at regular intervals. The statistics are uploaded via the interface 41 to the performance handler controller 40, which in turn writes them to the log file 43 and transmits them to the pre-set processes via the interface 42.

The process manager constantly monitors the state of all other processes in order to provide a level of tolerance to software faults. On detection of failure of a process, the process manager attempts restart and reports the outcome to the event handler. The configuration DBS server 16 provides the association tables for the agents 20 and 21, described above.

It will be appreciated that the invention provides a very simple network access system which provides for very fast and versatile routing of signals between networks and short message service centres. The fast response time is achieved because of the simplicity of construction of the network access system - simple interconnections of gateway and interworking agents, and gateway and interworking switching centres. The versatility is achieved primarily because of the association of the external short messages entities and short message service centres by each agent which, in effect, allows each agent to service an on-going hierarchy of entities. A major advantage of the invention is the simplicity with which the fast response time and versatility is achieved.

The invention is not limited to the embodiments hereinbefore described, but may be varied in construction and detail.

## Claims

1. A network access systems (6) for routing of short messages, the network access system comprising:-
a gateway switching centre (22) comprising means for transmitting short messages to a network;
an interworking switching centre (23) comprising means for receiving short messages from a network; and
a gateway agent (20) connected to the gateway switching centre and an interworking agent (21) connected to the interworking switching centre, each agent being publicly addressable and comprising means for communicating with a plurality of external short message service centres, each service centre being associated with a plurality of short message entities.

2. A network access system as claimed in claim 1, wherein each agent comprises a table of associations cross-referencing external short message service centres with short message entities.

3. A network access system as claimed in claims 1 or 2, comprising:-
a transfer layer (10) comprising the agents,
a relay layer (11) comprising the switching centres; and
a network API (12) connected to the switching centres and comprising means for connection to the network.

4. A network access system as claimed in any preceding claim, further comprising a separate and addressable database server (14) connected to a database (15), the database server comprising means for establishing internal communication links with requesting processes in the network access system for multiple access, said processes including the agents and the switching centres.

5. A network access system as claimed in claim 4, wherein the database server (14) comprises means for performing database operations independently of the requesting processes.

6. A network access system as claimed in any preceding claim, wherein processes within the system comprise means for communicating with each other by establishing one-to-one channels directly interconnecting pairs of processes, and for transmitting and receiving signals via the sockets using interprocess communication protocols.

7. A network access system as claimed in any preceding claim, further comprising a set of common processes (16 to 19) each comprising means for communicating with processes in other parts of the network access system.

8. A network access system as claimed in claim 7, wherein at least some of the processes of the system are programmed to detect when pre-set events occur and to automatically transmit signals representing these events to an event handler process (17) within the common set of processes.

9. A network access system as claimed in claim 8 wherein the event handler (17) process comprises means (30) for filtering received event signals and, according to the filter criteria, writing the events with a time stamp to a log file (33), and transmitting event information to other processes.

10. A network access system as claimed in any of claims 7 to 9, wherein at least some processes comprise means for updating a counter (46,47) with statistical information as operations are performed, and the common set comprises a performance handler (18) comprising means for polling said processes and retrieving statistical information.

11. A network access system as claimed in any preceding claim, wherein at least some processes are programmed to recognise a data storage flag indicating a transient or a persistent status.

12. A network access system as claimed in any preceding claim, further comprising a process manager (19) comprising means for monitoring operating system utilities to determine activation status of processes and for directing re-start of processes which have shut down.

13. A network access system as claimed in any preceding claim, further comprising a configuration database server (16) comprising means for storing and retrieving system configuration parameters for processes of the system.

14. A network access system for routing of short messages, the network access system comprising:-
a network API layer (12) having means for connection to a plurality of networks;
a relay layer (11) comprising a gateway switching centre (22) comprising means for transmitting short messages to a network and an interworking switching centre (23) comprising means for receiving short messages from a network; and
a transfer layer (10) comprising a gateway agent (20) connected to the gateway switching centre and an interworking agent (21) connected to the interworking switching centre, each agent being publicly addressable and comprising means for communicating with a plurality of external short message service centres and comprising a table of associations cross-referencing external short message service centres with short message entities.

## Patentansprüche

1. Netzzugriffssystem (6) zum Leiten von Kurznachrichten, wobei das Netzzugriffssystem umfaßt:
ein Netzkopplungsschaltzentrum (22), das Mittel zum Übertragen von Kurznachrichten an ein Netz aufweist;
ein interarbeitendes Schaltzentrum (23), das Mittel zum Empfangen von Kurznachrichten von einem Netz aufweist; und
ein an das Netzkopplungsschaltzentrum angeschlossenes Netzkopplungsmedium (20) und ein an das interarbeitende Schaltzentrum angeschlossenes interarbeitendes Medium (21), wobei jedes Medium öffentlich adressierbar ist und Mittel zum Kommunizieren mit einer Vielzahl externer Kurznachrichtenservicezentren aufweist, und jedes Servicezentrum mit einer Vielzahl von Kurznachrichtenentitäten verknüpft ist.

2. Netzzugriffssystem nach Anspruch 1, bei dem jedes Medium eine Verknüpfungstabelle aufweist, die Querverweise von externen Kurznachrichtenservicezentren zu Kurznachrichtenentitäten herstellt.

3. Netzzugriffssystem nach Anspruch 1 oder 2, das umfaßt:
eine die Medien aufweisende Transferschicht (10),
eine die Schaltzentren aufweisende Relaisschicht (11); und
ein Netz-API (12), das an die Schaltzentren angeschlossen ist und Mittel für Anschluß an das Netz aufweist.

4. Netzzugriffssystem nach einem vorhergehenden Anspruch, das weiter einen getrennten und adressierbaren Datenbankserver (14) angeschlossen an eine Datenbank (15) aufweist, wobei der Datenbankserver Mittel zum Herstellen interner Kommunikationsverbindungen mit Anforderungsprozessen in dem Netzzugriffssystem für Mehrfachzugriff aufweist, wobei die genannten Prozesse die Medien und die Schaltzentren einschließen.

5. Netzzugriffssystem nach Anspruch 4, bei dem der Datenbankserver (14) Mittel zum Ausführen von Datenbankoperationen unabhängig von den Anforderungsprozessen aufweist.

6. Netzzugriffssystem nach einem vorhergehenden Anspruch, bei dem Prozesse innerhalb des Systems Mittel zum Kommunizieren miteinander durch Herstellen von umkehrbar eindeutigen Kanälen aufweisen, die direkt Prozeßpaare miteinander verbinden, und zum Übertragen und Empfangen von Signalen über die Steckstellen unter Verwendung von Interprozeßkommunikationsprotokollen.

7. Netzzugriffssystem nach einem vorhergehenden Anspruch, das weiter einen Satz allgemeiner Prozesse (16 bis 19) aufweist, die jeweils Mittel zum Kommunizieren mit Prozessen in anderen Teilen des Netzzugriffssystems aufweisen.

8. Netzzugriffssystem nach Anspruch 7, bei dem wenigstens einige der Prozesse des Systems zum Ermitteln programmiert sind, wann voreingestellte Ereignisse erfolgen, und automatisch diese Ereignisse darstellende Signale an einen Ereignisbearbeitungsprozeß (17) innerhalb des allgemeinen Prozeßsatzes übertragen.

9. Netzzugriffssystem nach Anspruch 8, bei dem der Ereignisverarbeitungsprozeß (17) Mittel (30) zum Filtern empfangener Ereignissignale aufweist und, entsprechend den Filterkriterien, zum Einschreiben der Ereignisse mit einer Zeitmarkierung in eine Logbuchdatei (33) und Übertragen von Ereignisinformationen zu anderen Prozessen.

10. Netzzugriffssystem nach einem der Ansprüche 7 bis 9, bei dem wenigstens einige Prozesse Mittel zum Aktualisieren eines Zählers (46, 47) mit statistischen Informationen während Ausführung von Operationen aufweisen, und der allgemeine Satz eine Leistungsverarbeiterung (18) aufweist, die Mittel zum Abrufen der genannten Prozesse und Wiedergewinnen statistischer Informationen aufweist.

11. Netzzugriffssystem nach einem vorhergehenden Anspruch, bei dem wenigstens einige Prozesse zum Erkennen einer Datenspeicherkennzeichnung programmiert sind, welche einen Übergangs- oder Dauerzustand anzeigt.

12. Netzzugriffssystem nach einem vorhergehenden Anspruch, das weiter einen Prozeßmanager (19) aufweist, der Mittel zum Überwachen von Operationssystemsdienstprogrammen aufweist, um den Aktivierungszustand von Prozessen zu bestimmen und Neustart von Prozessen zu leiten, die abgeschaltet sind.

13. Netzzugriffssystem nach einem vorhergehenden Anspruch, das weiter einen Konfigurations-Databankserver (16) aufweist, der Mittel zum Speichern und Wiedergewinnen von Systemkonfigurationsparametern für Prozesse des Systems aufweist.

14. Netzzugriffssystem zum Leiten von Kurznachrichten, wobei das Netzzugriffssystem aufweist:
eine Netz-API-Schicht (12) mit Mitteln für Anschluß an eine Vielzahl von Netzen;
eine Relaisschicht (11), die ein Mittel zum Übertragen von Kurznachrichten an ein Netz aufweisendes Netzkopplungsschaltzentrum (22) und ein interarbeitendes Schaltzentrum (23) aufweist, das Mittel zum Empfangen von Kurznachrichten von einem Netz aufweist; und
eine Transferschicht (10), die ein Netzkopplungsmedium (20) angeschlossen an das Netzkopplungsschaltzentrum und ein interarbeitendes Medium (21) angeschlossen an das interarbeitende Schaltzentrum aufweist, wobei jedes Medium öffentlich adressierbar ist und Mittel zum Kommunizieren mit einer Vielzahl externer Kurznachrichtenservicezentren aufweist, und eine Verknüpfungstabelle aufweist, die Querverweise von externen Kurznachrichtenservicezentren zu Kurznachrichtenentitäten herstellt.

## Revendications

1. Système d'accès de réseau (6) pour l'acheminement de courts messages, le système d'accès de réseau comprenant:-
un centre de commutation de transit international (22) comprenant un moyen pour transmettre de courts messages à un réseau ;
un centre de commutation d'interconnexion (23) comprenant un moyen pour recevoir de courts messages provenant d'un réseau ; et
un agent de transit international (20) connecté au centre de commutation de transit international et un agent d'interconnexion (21) connecté au centre de commutation d'interconnexion, chaque agent étant adressable publiquement et comprenant un moyen pour communiquer avec une pluralité de centres de services de courts messages externes, chaque centre de service étant associé à une pluralité d'entités de courts messages.

2. Système d'accès de réseau selon la revendication 1, dans lequel chaque agent comprend une table d'associations renvoyant des centres de services de courts messages externes à des entités de courts messages.

3. Système d'accès de réseau selon la revendication 1 ou 2, comprenant :
une couche de transfert (10) comprenant les agents,
une couche de relais (11) comprenant les centres de commutation ; et
une API (interface de programmation d'application) de réseau (12) connectée aux centres de commutation et comprenant un moyen pour la connexion au réseau.

4. Système d'accès de réseau selon l'une quelconque des revendications précédentes, comprenant en outre un serveur de base de données (14) séparé et adressable connecté à une base de données (15), le serveur de base de données comprenant un moyen pour établir des liaisons de communication internes avec des processus demandeurs dans le système d'accès de réseau pour un accès multiple, lesdits processus comportant les agents et les centres de commutation.

5. Système d'accès de réseau selon la revendication 4, dans lequel le serveur de base de données (14) comprend un moyen pour effectuer des opérations de base de données indépendamment des processus demandeurs.

6. Système d'accès de réseau selon l'une quelconque des revendications précédentes, dans lequel les processus au sein du système comprennent des moyens pour communiquer les uns avec les autres en établissant des canaux univoques interconnectant directement des paires de processus, et pour transmettre et recevoir des signaux par l'intermédiaire des prises utilisant des protocoles de communication interprocessus.

7. Système d'accès de réseau selon l'une quelconque des revendications précédentes, comprenant en outre un ensemble de processus communs (16 à 19), comprenant chacun un moyen pour communiquer avec des processus dans d'autres parties du système d'accès de réseau.

8. Système d'accès de réseau selon la revendication 7, dans lequel au moins certains des processus du système sont programmés en vue de détecter l'occurrence d'événements préétablis et transmettre automatiquement des signaux représentant ces événements à un processus gestionnaire d'événements (17) au sein de l'ensemble commun de processus.

9. Système d'accès de réseau selon la revendication 8, dans lequel le processus gestionnaire d'événements (17) comprend un moyen (30) pour filtrer des signaux d'événements reçus et, en fonction des critères du filtre, écrire les événements avec un horodatage dans un fichier-journal (33) et transmettre des informations d'événements à d'autres processus.

10. Système d'accès de réseau selon l'une quelconque des revendications 7 à 9, dans lequel au moins certains processus comprennent des moyens pour mettre à jour un compteur (46, 47) avec des informations statistiques au fur et à mesure que des opérations sont effectuées, et l'ensemble commun comprend un gestionnaire de performances (18) comprenant un moyen pour interroger lesdits processus et extraire des informations statistiques.

11. Système d'accès de réseau selon l'une quelconque des revendications précédentes, dans lequel au moins certains processus sont programmés en vue de reconnaître un indicateur de stockage de données indiquant un état transitoire ou persistant.

12. Système d'accès de réseau selon l'une quelconque des revendications précédentes, comprenant en outre un gestionnaire de processus (19) comprenant un moyen pour surveiller des utilitaires de système d'exploitation en vue de déterminer l'état d'activation des processus et pour diriger le redémarrage des processus qui ont été arrêtés.

13. Système d'accès de réseau selon l'une quelconque des revendications précédentes, comprenant en outre un serveur de base de données de configuration (16) comprenant un moyen pour stocker et extraire des paramètres de configuration de système pour des processus du système.

14. Système d'accès de réseau pour l'acheminement de courts messages, le système d'accès de réseau comprenant :
une couche API (interface de programmation d'application) de réseau (12) ayant un moyen de connexion à une pluralité de réseaux ;
une couche de relais (11) comprenant un centre de commutation de transit international (22) comprenant un moyen pour transmettre de courts messages à un réseau et un centre de commutation d'interconnexion (23) comprenant un moyen pour recevoir de courts messages provenant d'un réseau ; et
une couche de transfert (10) comprenant un agent de transit international (20) connecté au centre de commutation de transit international et un agent d'interconnexion (21) connecté au centre de commutation d'interconnexion, chaque agent étant adressable publiquement et comprenant un moyen pour communiquer avec une pluralité de centres de service de courts messages externes et comprenant une table d'associations renvoyant les centres de services de courts messages externes à des entités de courts messages.
